# EUROPÄISCHE PATENTANMELDUNG

(11) **EP 2 572 875 A1**
(43) Veröffentlichungstag der Anmeldung: **27.03.2013**
(21) Anmeldenummer: 11007800.3
(22) Anmeldetag: 26.09.2011
(51) Int. Cl.: B32B 9/02, B65D 65/40, B65D 77/20

(54) **Biologisch abbaubare Verpackungsmaterialien**

(71) Anmelder: Tscheulin-Rothal GmbH, 79331 Teningen (DE)
(72) Erfinder: Wolters, Detlef, 79379 Müllheim (DE)
(74) Vertreter: Gernet, Samuel Andreas

(57) **Zusammenfassung**

Siegelbares Verpackungsmaterial, Insbesondere Deckelmaterial, beispielsweise zur Bedeckelung von Behältern, wie Bechem, befüllt mit z.B. Molkereiprodukten, enthaltend wenigstens eine Schicht aus einem biologisch abbaubaren oder aus einem natürlichen aus nachwachsenden Rohstoffen hergestellten Folienmaterial, beispielsweise bestehend aus oder enthaltend PLA (Polylactic Acid). Das Verpackungsmaterial weist auf wenigstens einer Seite eine Extrusionsbeschichtung oder einen Siegellack auf. Die Extrusionsbeschichtung oder der Siegellack enthält einen Füllstoff zur Einstellung der Peel- oder Schälbarkeit solcher Deckel von den Bechern.

## Beschreibung

Siegelberes Verpackungsmaterial, insbesondere Deckelmaterial, enthaltend wenigstens eine Schicht aus einem biologisch abbaubaren oder aus einem natürlichen aus nachwachsenden Rohstoffen hergestellten Folienmaterial.

Biologisch abbaubare (gemäß EN 13432), natürliche, bzw. aus nachwachsenden Rohstoffen hergestellte Verpackungsmaterialien, wie beispielsweise Bechermateriallen für Lebensmittelverpackungen und Folienmaterialien, insbesondere Deckelmaterialien, zum Verschliessen solcher Verpackungen, sind an sich bekannt.
Problematisch dabei galten bisher geeignete Deckelmaterialien, besonders wenn diese nicht von der Rolle, sondern als vorgestanzte Deckel zum Einsatz kommen.
Für diese Klasse von Verpackungsmaterialien ist ein peelendes Ablösen des Deckelmaterials erforderlich, damit der Endkunde leicht an das Produkt gelangen kann. Gleichzeitig soll aber die Verpackung dicht sein, damit bei Lagerung und Transport ein umfassender Schutz des Produktes gewährleistet ist.
Da die bisherigen biologisch abbaubaren, natürlichen und/oder aus nachwachsenden Rohstoffen bestehenden Verpackungsmaterialien teilweise große Nachteile gegenüber konventionellen Rohstoffen wie z.B. auf Polyolefinen, Polyester und Styrol basierenden Rohstoffen aufweisen, haben sich diese Rohstoffe auf dem Gebiet der Verpackungen, besonders auf dem Gebiet vorgestanzter Deckel, am Markt nicht durchsetzen können.

Besonders nachteilig wirken sich nachfolgende erläuterte Eigenschaften von biologisch abbaubaren, natürlichen und/oder aus nachwachsenden Rohstoffen bestehenden Deckelmateriallen aus. Beispielsweise bei einer Kombination von biologisch abbaubaren Materialien müssen Klebersysteme eingesetzt werden, welche selbst nicht biologisch abbaubar sind und/oder aus Rohstoffen bestehen, die nicht Resourcen schonend sind. Im weiteren sind Versiegelungen der Deckelmateriallen, gerade wenn das Siegelmaterial aus dem gleichen Basisrohstoff hergestellt wird, üblicherweise "festsiegelnd", kommen somit der Forderung des Verbrauchers nach leichtem Öffnen der Verpackung (Peelkraft ca. 4-10 N/15 mm) nicht entgegen. Den üblicherweise angewendeten Siegeltemperaturen von 200°C, oder mehr, halten biologisch abbaubare Rohstoffe, wie z.B. PLA-Folien (Polylactic Acid) nicht ausreichend stand. Gerade bei längerer Produkthaltbarkelt müssen die Deckelmateriallen häufig gegen die im Produkt enthaltene Feuchtigkeit und/oder das Produkt selbst gegen Außenfeuchtigkeit geschützt werden. Schichtstoffe sind für vorgestanzte Deckelmaterialien wegen ihrer guten Planlage an sich vorteilhaft, wird aber z.B. Papier in die Mittellage eines solchen ausgestanzten Deckels oder Platine eingearbeitet, so sind die bisher verwendeten Klebersysteme weder biologisch abbaubar noch sind sie aus natürlichen oder nachwachsenden Rohstoffen. Papier als Teil eines Deckelmaterials ist außerdem wegen seiner schlechten Wärmeleitfähigkeit mit Nachteilen hinsichtlich der Siegelfähigkeit behaftet, In diesem Fall sind lange Siegelzeiten erforderlich, da aus der Natur der biologisch abbaubaren, natürllchen und/oder nachwachsenden Rohstoffe heraus keine hohen Siegeltemperaturen (beispielsweise größer ca. 180-200°C) angewendet werden können.

Es wurden bereits Deckellösungen für Behälter für Milchprodukte und Feinkost aus einem Schichtstoff, enthaltend PLA-Folien und Papier, beschrieben (www.natureworksllc.com, Lidding solutions: Dairy & dell containers). Einer der bereits genannten Nachteile der am Markt vorgestellten Konstruktion mit der Schichtfolge PLA-Folie / Papier / PLA-Folie / Siegellack ist der niedrige Wärmeübergang beim Siegelprozess. Als weiterer Nachteil kann sich das Fehlen geeigneter biologisch abbaubarer oder Inerter Klebstoffe zur Herstellung solcherart aufgebauter Verbunde erweisen. Ist seitens Produkt oder Umgebung mit hoher Feuchtigkeit zu rechnen, dann zeigt sich ein gravierender Schwachpunkt bei Folien genannten Aufbaus. Papiere, auch als Teil eines Verbundes, neigen dazu Feuchtigkeit aufzunehmen und die Schnittkanten eines vorgestanzten Deckels lassen Feuchtigkeit von außen ungehindert in das Deckelmaterial eindringen. Neben technischen Problemen, wie z.B. eine Delamination des Verbundes, ist in diesem Fall auch mit einem mikrobiellen Angriff auf das feuchte Papier zu rechnen, was bei der Verpackung von Lebensmitteln eine nicht tolerierbare Schwachstelle darstellt.

Aufgabe vorliegender Erfindung ist es, die genannten Nachteile zu überwinden und ein Verpackungsmaterial, insbesondere ein Deckelmaterial, zur Verfugung zu stellen, dessen Verarbeitungs- und Anwendungseigenschaften möglichst nah an den bisher eingesetzten Materialien liegen. Damit soll ermöglicht werden, biologisch abbaubare und Resourcen schonende Verpackungsmaterialien in den bisherigen Verpackungsprozessen und Lagerbedingungen einzusetzen.

Erfindungsgemäss wird dies dadurch erreicht, dass das Verpackungsmaterial auf wenigstens einer Seite eine Extrusionsbeschichtung oder einen Siegellack aufweist, die einen Füllstoff zur Einstellung der Schälbarkeit enthalten.

Beim Folienmaterial kann es sich beispielsweise um eine stärkebasierende Folie oder um Follen enthaltend oder bestehend aus Polylactat Säuren (Polylactic Acid, PLA) handeln, Polylactat Säuren sind Polymere Ester aus natürlich vorkommenden Hydroxysäuren, wie der Glykol- oder der Lactatsäure. Die Folien können ungereckt, zweckmässig jedoch uniaxial oder biaxial gereckt seln. Ist die Folie unlaxial gereckt, so erfolgt die Reckung vorteilhaft in Maschinenrichtung (MDO). Ein Reckungsverhältnis von 3 bis 7 ist vorteilhaft anzustreben. Bevorzugte Folien sind daher biaxial gereckt, um möglichst balancierte Eigenschaften und hohe Steifigkeit zu vereinen.

Die Folie kann als Monofolie oder in einem Mehrfolienverbund angewendet werden. Die Folien können eine Dicke von 8 bis 60 µm aufweisen. Monofolien können bevorzugt eine Dicke von 40 bis 60 µm aufweisen. Mehrfolienverbunde können beispieisweise zwei, drei, vier oder mehr Follen, die gegenseitig trennfest verbunden sind, aufweisen. Die einzelnen Folien in Mehrfolionverbunden weisen bevorzugt eine Dicke von jeweils 8 bis36 µm, vorzugsweise 10 bis 20 µm, auf.

Das Verpackungsmaterial kann beispielsweise eine Monofolie enthalten, die auf wenigstens einer der beiden Seiten die Extrusionsbeschichtung oder den Siegellack aufweist, der den Füllstoff zur Einstellung der Peel- oder Schälbarkeit enthält. Entsprechend kann ein Mehrfollenverbund auf wenigstens einer Seite die Extrusionsbeschichtung oder den Siegellack aufweisen, der den Füllstoff zur Einstellung der Peel- oder Schälbarkeit enthält.

Bei der Extrusionsbeschichtung oder dem Siegellack kann es sich um einen Siegellack bestehend aus oder enthaltend ein stärkebasierendes Polymer oder um eine Extrusionsbeschichtung bestehend aus oder enthaltend PLA oder ein stärkebaslerendes Polymer handeln. Dem Siegellack oder der Extrusionsbeschichtung kann der Füllstoff beigegeben werden. Zweckmässig sind Mengenanteile von 10 bis 60 Gew.-%, vorzugsweise von 15 bis 30%, bezogen auf die Gesamtmenge des gefüllten Siegellackes, resp. der gefüllten Extrusionsbeschichtung. Der Füllstoff kann dem Siegellack oder der Extrusionsbeschichtung in Form eines Masterbatches zugegeben werden. Zur besseren Verarbeitbarkeit ist es zweckmäßig, gerade Im Falle der Extrusionsbeschichtung, dass ein Masterbatch, der den Füllstoff In konzentrierter Form in einer Teilmenge des Polymers enthält, eingesetzt wird. Dadurch werden das Polymer und der Füllstoff schonend gemischt und granuliert. Der Füllstoffgrad bestimmt dabei die spätere Peel- oder Abschälkraft. Bevorzugte Peel- oder Abschälkräfte betragen 2 bis 15 N/15 mm, besonders bevorzugt sind Abschälkräfte von 4 bis 10 N/15 mm.

Für die Herstellung des Siegellackes empfiehlt sich neben Füllstoff und biologisch abbauendem Polymer auch der Einsatz natürlicher Bindemittel, damit das Gesamtsystem biologisch abbaubar, resp. das Gesamtsystem aus natürlichen und/oder aus nachwachsenden Rohstoffen bestehen bleibt, Bei Einsatz eines Siegellackes empfiehlt sich außerdem der Einsatz eines Konservierungsmittels, damit mikrobielle Angriffe auf die Siegelschicht und damit an der Grenzfläche Produkt/Siegelfläche zuverlässig unterbunden werden. Als Konservierungsmittel kommen beispielsweise die in der "Verordnung über die Zulassung von Zusatzstoffen zu Lebensmitteln zu technologischen Zwecken" (ZZuIV) genannten Stoffe in Frage.

Typische Füllstoffe sind z.B. Kreide (CaCO₃, Calciumcarbonat), Talk (Magnealumsilikathydrat) und Siliziumdioxid (SiO₂, Silika). Es können auch nachwachsende Rohstoffe wie z.B. Holzmehl als Füllstoff eingesetzt werden. Fallweise kann als Füllstoff ein Holz-Kunststoff-Material angewendet werden, welches auch unter der Bezeichnung Wood-Plastic-Composites (WPC) bekannt ist. Geeignete Füllstoffe haben insbesondere eine Korngrösse von 1 bis 10 µm.

Die Extrusionsbeschichtung kann in Mengen von 7 bis 30 g/m², zweckmässig von 10 bis 20 g/m² und insbesondere von 13 bis 17 g/m² auf das Folienmatenal mittels einer Extrusionsbeschichtungsanlage aufgetragen werden. Der Siegellack kann in Mengen von 1 bis 10 g/m², zweckmässig von 2 bis 8 g/m² und insbesondere von 2 bis 6 g/m² auf dem Folienmaterial, beispielsweise durch aufdrucken, vorzugsweise im Tiefdruckverfahren, lackieren, sprühen, giessen, tauchen, rakeln etc., aufgetragen werden.

Alternativ zur Monofolie kann es sich beim Folienmaterial um eine Mehrschichtfolie, beispielsweise enthaltend mehrere Schichten, insbesondere zwei oder drei Schichten, bestehend aus oder enthaltend stärkebasierende Folien oder um Folien bestehend aus oder enthaltend Polylactatsäuren, handeln. Die einzelnen Folien weisen bevorzugt eine Dicke von jeweils 8 bis 36 µm, vorzugsweise 10 bis 20 µm, auf. Die Schichten können - jede für sich - unverstreckt oder uniaxial oder biaxial verstreckt sein. Die einzelnen Schichten werden zweckmässig durch Klebstoff haftend oder trennfest miteinander verbunden oder alternativ extrusionskaschiert, bzw. coextrudiert.

Da das System auch in diesem Fall biologisch abbaubar bleiben soll und/oder nur natürliche, bzw. nachwachsende Rohstoffe enthalten soll, muss insbesondere ein diese Anforderungen erfüllendes Klebersystem oder Extrusionskaschierrohstoff eingesetzt werden.

Beispiele geeigneter Klebstoff-Systeme sind z.B. kaseinhaltige Leime (basierend auf Milchproteinen), sogenanntes "Wasserglas "(Kallum- oder Natriumsillcat) oder biologisch abbaubare Klebersysteme basierend auf Polyurethanen, wie z.B, das Polyurethan-Klebersystem "Epotal P 100 ECO" der Fa. BASF. Bei der Extrusionskaschierung kann auch ein PLA-Rohstoff verschiedene Filme, z.B. biaxial gereckte PLA-Folien, miteinander verbinden.

Eine oder mehrere Schichten einer Mehrschichtfolie können ein- oder beidseitig mit einer Barriereschicht versehen sein. Beispiele solcher Barreschichten sind chemisch oder physikalisch Im Vakuum oder durch sputtern abgeschiedene Schichten aus Oxiden oder Nitriden des Aluminiums oder des Siliciums, z.B. Aluminiumoxiden der Formel Al_{y}O_{z}, wobei y:z eine Zahl von 0,66 bis 1 sein kann und Al₂O₃ bevorzugt ist, oder Siliciumoxiden der allgemeinen Formel SiOₓ, wobei x eine Zahl von 1 bis 2, vorzugsweise 1,5 bis 1,8, sein kann. Es handelt dabei um Schichtdicken im Nano-Bereich, von z.B. 1 bis 1000 nm, zweckmässig von 5 bis 100 nm und vorteilhaft von 10 bis 30 nm. In anderer Ausführung ist eine Metalllsierung durch nasschemische Prozesse und bevorzugt durch physikalische Prozesse in Schichtdicken von z.B. 1 bis 1000 nm, zweckmässig 5 bis 100 nm und vorteilhaft von 10 bis 30 nm, möglich. Metallisierungen können beispielsweise mittels Aluminium oder einer Aluminiumlegierung erfolgen. Anstelle von metallisierten Schichten aus Aluminium können auch andere Metalle oder Metellgemische eingesetzt werden, wobei solche Metalle Innerhalb der Abbauprodukte des Verpackungsmaterials ungiftig und unbeiastend sein müssen. Solche Metalle wären Gold und Silber, die aus Kostengründen jedoch wenig Einsatz finden würden.

Beispielsweise eine Aluminiumbedampfung, als Metalllslerung, oder eine SiOx-Bedampfung, die eine Glasbeschichtung darstellt, in Schichtdicken von nur 50 bis 1000 nm aufgetragen, stehen durch das physiologisch unbedenkliche Material und deren geringen Mengen der Forderung nach Abbaubarkeit nach EN 13432 nicht im Wege.

Besonders geeignet für den Einsatz für die Barrierebeschichtung sind Folienmaterialien, wie beispielsweise eine stärkebasierende Folie oder eine Folie enthaltend oder bestehend aus Polylactatsäuren. Die stärkebasierende Folien oder eine Polylactatsäure-Follen, die biaxial gereckt sind und in einem anschließendem Arbeitsgang mit einer Barriereschicht, wie z.B. einer Aluminlumbedampfung oder einer SiOₓ-Bedampfung, versehen werden, sind besonders für den Einsatz In Verpackungsmaterialien nach vorliegender Erfindung geeignet.

Aus wirtschaftlichen Gründen soll die beschichtete Folie so dünn wie möglich sein, da die Barrierebeschichtung in einem diskontlnuierlichen Verfahren unter Vakuum durchgeführt wird. Je dünner die zur Beschichtung vorgesehene Folie ist, umso mehr Folie kann in die Vakuumkammer eingebracht werden und umso höher ist die Ausbeute für einen Arbeitsgang in der Beschichtungskammer. Idealerweise hat eine so beschichtete Folie die bereits genannten Stärken von 8 bis 36 µm, vorzugsweise von 10 bis 20 µm. Das Beschichten von Monofolien zur Erzeugung von Monofolien mit Barriereeigenschaften, beispielsweise in Dicken von 40 bis 60 µm, für vorliegende Verpackungsmaterialien, ist möglich, wird jedoch aus den genannten wirtschaftlichen Gründen nicht bevorzugt.

Die ein- oder beidseitig mit einer Barriereschicht beaufschlagten Folien können anschließend mit wenigstens einer weiteren Folie kaschiert werden. Die weitere Folie oder weiteren Folien können ohne Barriereschicht sein oder können ein oder beidseitig mit einer Barriereschicht beaufschlagt sein. Die Barrierefolien können beliebig mit einer, zwei, drei oder mehreren Barriere beschichteten oder nicht beschichteten Folien kombiniert werden. Beispiele sind eine Barrierefolie kombiniert mit einer weiteren Folie oder zwei Barrierefolien kombiniert, wie zwei metallisierte Folien kombiniert oder zwei SiOₓ beschichtete Folien kombiniert oder eine metallisierte Folie kombiniert mit einer mit SiOₓ beschichteten Folie, usw. Besonders dünne Barrierefolien können auch eine Mittellage aus unbeschichteter Folie enthalten. Damit wird die notwendige Steifigkeit erhalten und wird gleichzeitig ökonomischen Anforderungen gerecht.
Der Einsatz von nur einer Barrierefolie kombiniert mit einer Nicht-Barrierefolle Ist denkbar, um besonderen Anforderungen gerecht zu werden. Beispielsweise ein trockenes Produkt benötigt z.B. auf der Innenseite einer Verpackung, also gegen den Verpackungsinhalt weisend, keine Barriere, jedoch wird in feuchter Umgebung eine aussen liegende oder in einem äusseren Bereich liegende Barriere benötigt.

Sinngemäss kann, als beispielhafte Aufzählung, ein Verpackungsmaterial einen Mehrfolienverbund der Schichtfolge, von der auf die Innenseite einer Verpackung weisenden Seite beginnend, enthalten:
Barriere/Folie/Klebstoff/Folie/Barriere.
Barriere/Folie/Klebstoff/Barriere/Folie,
Folie/Barriere/Klebstoff/Folie/Barriere,
Folie/Barriere/Klebstoff/Barriere/Folie,
Barriere/Folie/Klebstoff/Folie,
Folie/Klebstoff/Barriere/Folie,
Folie/Barriere/Klebstoff/Folie,
Folie/Klebstoff/Barriere/Folie,
Folie/Klebstoff/Folie/Barriere,
Barriere/Folie/Klebstoff/Folie/Klebstoff/Folie/Barriere,
Barriere/Folie/Klebstoff/Folie/Klebstoff/Barriere/Folie,
Folie/Barriere/Klebstoff/Folie/Klebstoff/Folie/Barriere,
Folie/Barriere/Klebstoff/Folie/Klebstoff/Barriere/Folie,
usw.

In der Regel auf der nach innen weisenden Seite, fallweise auf der nach aussen weisenden Seite oder auf beiden Seiten der Mehrschichtfolien wird die mit Füllstoff beladene Extrusionsbeschichtung oder der Siegellack aufgetragen.

Werden Verpackungsmaterialien beispielsweise durch Ausstanzen zu Deckeln vereinzelt und die Deckel zu Stapeln geschichtet, so lassen sich die Deckel, insbesondere in Verpackungsmaschinen, durch den Glasplatteneffekt, oft nur unzureichend vereinzeln. Deshalb kann es notwendig werden, die Deckel mit einer ein- oder beidseitigen Prägung, wie einer Würmchenprägung, einer Damastprägung oder einer Nadelstichprägung, zu unterziehen oder wenigstens eine Seite der Deckel mit Abstandshaltern zu versehen. Die Abstandshalter können auf dem Verpackungsmaterial aufgedruckt sein oder können auf die gestanzten Deckel aufgedruckt werden. Dies ist sowohl auf der mit Siegellack lackierten Folie, wie auch auf der extrusionsbeschichteten Folie möglich. Der Druck kann auf der Vorder-, der Rückseite oder beidseitig erfolgen. Der Druck kann in einer Druckmaschine ausgeführt werden und anstelle eines Farbdruckes oder simultan mit einem Farbdruck, können weitgehend beliebige Druckmuster aufgebracht werden. Das Druckmuster soll seitliches Eindringen oder Entweichen von Umgebungsluft ermöglichen. Dies kann durch ein Punkt- oder Strichmuster oder ein Muster anderer geometrischer Formen erreicht werden Die Form und Anzahl der Punkte und Striche erlaubt dabei weiten Spielraum. Zusätzlich zu oder anstelle von den Punkten oder Strichen können auch Schriften oder Logos aufgedruckt werden.

Das Druckmuster kann aus einem druckfähigen Lack, der fallweise durch Füllstoffe angereichert ist, gebildet werden. Beispielsweise kann das Druckmuster aus dem bereits genannten Siegellack, wie einem PLA-haltigen Siegellack, gebildet sein, wobei der Siegellack für das Druckmuster vorteilhaft eine Konzentration an Füllstoffen von z.B. 50 bis 90 Gew.-% aufweisen soll. Das Druckmuster kann in Schichtdicken von 2 bis 50 µm, vorzugsweise 2 bis 20 µm, aufgedruckt werden.

Weiterhin kann die Siegeltemperatur für vorliegendes Verpackungsmaterial, beispielsweise eines daraus hergestellten Deckels, durch den Einsatz von Überlacken weiter erhöht werden. Durch ihre hohe Temperaturbeständigkeit schützen die Überlacke das darunter liegende Bio-Polymer. Üblicherweise genügen bereits 0,5 bis 2 g/m² eines Lackes, beispielsweise eines Cellulosenitrat-Lackes, dessen Hauptkomponente wiederum aus nachwachsendem Rohstoff besteht, um die mögliche Siegeltemperatur in einen Bereich von beispielsweise über 200 °C anzuheben oder die Siegelzeit bei niedrigerer Temperatur zu verlängern. Die Verarbeitung wird dadurch deutlich ökonomischer, da die Taktzeiten einer Abfüllanlage die Produktivität bestimmen.

Es hat sich auch gezeigt, dass die biologisch abbaubaren und auf Stärke basierenden Rohstoffe zu Verpackungmaterialien für vorgestanzte Deckel besonders gut verarbeiten lassen, wenn die eingesetzten Folien vorher biaxial gereckt wurden. Ein Reckprozess unterstützt die Folien in der Erzeilung einer für die Stanzung notwendige Steifigkeit. Sowohl bei den genannten mehrschichtigen Folien, wie auch bei den im Verhältnis dickeren Monofolien, kann die für vorgestanzte Deckel notwendige Steifigkeit erzielt werden.

Verpackungsfolien nach vorliegender Erfindung sind gegen sich selbst, als auch, z.B. in Form von Deckeln, gegen Behälter siegelbar. Besonders gut sind die Deckel auf Stärke basierende Bechermaterialien siegelbar. Durch die Menge an Füllstoff im Siegellack oder in der Extrusionsschicht kann in diese Siegelung auf ein verbraucherfreundliches Mass zum Öffnen der Verpackung eingestellt werden. Die Abschäl- oder Peelkraft liegt soll unter 10 N/15 mm liegen. Vorteilhaft, gerade für den Milchproduktemarkt, wie für Yoghurt-, Quark, Sahne-, Pudding-, Sauerrahm- oder Sauermilchverpackungen oder auch für Müesliverpackungen, Fleisch- und Wurstwarenverpackungen, sog. Convenience Food oder Säfteverpackungen etc., sind Abschälkräfte von 3 bis 12 N/15mm vorteilhaft und von 4 bis 10 N/mm bevorzugt. Die Deckel können nach Bedarf eine Haltelasche od. dergl. zum leichten Fassen und Abschälen des Deckels aufweisen.

Entsprechend den beschriebenen Einsatzzwecken kann das Verpackungsmaterial in Form von Rollen zum Ausstanzen der Deckel oder bereits als vereinzelte Deckel bereitgestellt werden. Typische Durchmesser oder Diagonalen solcher Deckel oder Ronellen können beispielsweise von unter 40 mm bis über 300 mm betragen. Beispiele von Behältergrössen können von unter 50 ml bis über 1000 ml betragen. Für beispielsweise Yoghurt sind Deckelgrössen von 60 mm bis 80 mm Durchmesser und Bechergrössen von 100 bis 250 ml üblich.

In vorteilhafter Weise kann mit dem erfindungsgemässen Verpackungsmaterial ein auf biologisch abbaubaren, natürlichen und / oder nachwachsenden Rohstoffen bestehendes Deckelsystem gefertigt werden, welches die eingangs erwähnten Nachteile bisheriger Systeme zu überwinden vermag. Eine biologische Abbaubarkeit nach EN 13432 kann bei sorgfältiger Auswahl der Rohstoffe erreicht werden.

Beispiele:
a) Schichtfolge in einem Verpackungsmaterial (z.B. Deckel) basierend auf einer Monofolie, von oben nach unten gelesen mit der an der Verpackung nach aussen weisenden Seite zur an einer Verpackung nach innen - dem Füllgut - weisenden Seite.

| |
|---|
| 0.5 - 2 g/qm Überlack (z.B. auf Cellulose-Nitrat basierend) |
| Wahlweise Bedruckung, Schöndruck |
| 40 - 60 µm, insbesondere 50 µm, PLA-Folie (z.B. NATIVIA NTSS 50 von Fa. Thagleef) |
| 15 g/m² Extrusionsbeschichtung aus PLA mit Füllstoff zur Einstellung der Peelbarkeit oder 2-6 g/m² PLA-Siegellack mit Füllstoff zur Einstellung der Peelbarkelt |
| Entstapelungshilfe in Form einer Prägung oder alternativ durch Bedruckung mit einem Druckmuster aus PLA-haltigem Siegellack mit sehr hohem Füllstoffgehalt |

b) Schichtfolge in Verpackungsmaterialien (z.B. für Deckel) basierend auf einer Mehrschichtfolie, fallweise mit Barriere, von oben nach unten gelesen, mit der an der Verpackung nach aussen weisenden Seite zur an einer Verpackung nach innen - dem füllgut - weisenden Seite.

| |
|---|
| 0.5 - 2 glqm Überlack (z.B. auf Cellulose-Nitrat basierend) |
| Wahlweise Bedruckung, Schöndruck |
| 20 µm PLA-Folie beschichtet mit SiOₓ (Ceramisfolie "CPN 001") oder unbeschichtete 20 µm PLA-Folie |
| Klebstoff (z.B. 1-5 g/qm EPOTAL P 100 ECO) |
| 20 µm PLA-Folie beschichtet mit SiOₓ, (Ceramisfolie "CPN 001") oder unbeschichtete 20 µm PLA-Folie |
| 15 g/m² Extrusionsbeschtehtung aus PLA mit Füllstoff zur Einstellung der Peelbarkeit oder 2-6 g/m² PLA-Siegellack mit Füllstoff zur Einstellung der Peelbarkeit |
| Entstapelungshilfe In Form einer Prägung oder alternativ durch Bedruckung mit einem Druckmuster aus PLA-haltigem Siegellack mit sehr hohem Füllstoffgehalt |

## Patentansprüche

1. Siegelbares Verpackungsmaterial, insbesondere Deckelmaterial, enthaltend wenigstens eine Schicht aus einem biologisch abbaubaren oder aus einem natürlichen aus nachwachsenden Rohstoffen hergestellten Folienmaterial,
**dadurch gekennzeichnet, dass**
das Verpackungsmaterial auf wenigstens einer Seite eine Extrusionsbeschichtung oder einen Siegellack aufweist, enthaltend einen Füllstoff zur Einstellung der Peel- oder Schälbarkeit.

2. Siegelbares Verpackungsmaterial nach Anspruch 1, **dadurch gekennzeichnet, dass** der Füllstoff in Mengen von 10 bis 60 Gew. -%, vorzugsweise von 15 bis 30 Gew.-% in der Extrusionsbeschichtung oder dem Siegellack enthalten ist.

3. Siegelbares Verpackungsmaterial nach Anspruch 1 und 2, **dadurch gekennzeichnet, dass** als Füllstoff In der Extrusionsbeschichtung oder dem Siegellack Calciumcarbonat, Siliciumdioxid, Magnesiumsilikathydrat oder Holzmehl enthalten ist.

4. Siegelbares Verpackungsmaterial nach einem der Ansprüche 1 bis 3, **dadurch gekennzeichnet, dass** das Verpackungsmaterial als Barriereschicht Oxide oder Nitride des Aluminiums oder des Siliciums, zweckmässig Aluminiumoxide der Formel Al_{y}O_{z}, wobei y:z eine Zahl von 0,66 bis 1 ist, bevorzugt Al₂O₃, oder Siliciumoxide der allgemeinen Formel SiOₓ, wobei x eine Zahl von 1 bis 2, vorzugsweise von 1,5 bis 1,8, ist, in Schichtdicken von 1 bis 1000 nm, zweckmässlg von 5 bis 100 nm und vorteilhaft von 10 bis 30 nm enthält.

5. Siegelbares Verpackungsmaterial nach einem der Ansprüche 1 bis 3, **dadurch gekennzeichnet, dass** das Verpackungsmaterial als Barriereschicht wenigstens eine metallisierte Schicht, zweckmässig aus Aluminium oder aus Aluminiumlegierungen, In Schichtdicken von 1 bis 1000 nm, zweckmässig von 5 bis 100 nm und vorteilhaft von 10 bis 30 nm, enthält.

6. Siegelbares Verpackungsmaterial nach einem der Ansprüche 1 bis 5, **dadurch gekennzeichnet, dass** das Verpackungsmaterial eine Peel- oder Abschälkraft von 3 bis 12 N/ 15mm vorteilhaft und von 4 bis 10 N/mm hat.
